# EUROPÄISCHE PATENTSCHRIFT

(11) **EP 1 616 173 B1**
(45) Veröffentlichungstag und Bekanntmachung des Hinweises auf die Patenterteilung: **12.09.2007**
(21) Anmeldenummer: 04723900.9
(22) Anmeldetag: 27.03.2004
(51) Int. Cl.: G01N 27/22

(54) **SENSORSYSTEM UND VERFAHREN ZU DESSEN HERSTELLUNG**
SENSOR SYSTEM AND METHOD FOR PRODUCING THE SAME
SYSTEME DE DETECTION ET PROCEDE DE REALISATION

(30) Priorität: 12.04.2003 DE 10316933
(43) Veröffentlichungstag der Anmeldung: 18.01.2006
(73) Patentinhaber: E+E Elektronik Ges. Mbh, 4209 Engerwitzdorf (AT)
(72) Erfinder: LINDORFER, Gerald, A-4170 Haslach a. d. Mühl (AT)
(74) Vertreter: Hofmann, Ernst
(86) Internationale Anmeldenummer: PCT/EP2004/003278
(87) Internationale Veröffentlichungsnummer: WO 2004/090523

(56) Entgegenhaltungen:
- EP-A- 0 329 436
- EP-A- 0 343 593
- RU-C- 2 143 678
- US-B1- 6 291 116
- US-B1- 6 483 324
- DATABASE WPI Section EI, Week 198227 Derwent Publications Ltd., London, GB; Class S01, AN 1982-J0918E XP002281382 -& SU 559 130 A (BAIMURATOV E A), 23. Dezember 1981 (1981-12-23)

## Beschreibung

Die Erfindung betrifft ein Sensorsystem, insbesondere zur Bestimmung der relativen Feuchte in Luft, gemäß dem Anspruch 1 und ein Verfahren zur Herstellung eines derartigen Sensorsystems gemäß dem Anspruch 7.

Derartige Sensorsysteme dienen häufig zur Bestimmung der relativen Feuchte etwa in Auto-Klimaanlagen, bei Haushaltsgeräten oder in Kopiergeräten und werden folglich in großen Stückzahlen eingesetzt. Als kostengünstige Bauform für die darin verwendeten Sensoren werden oft sogenannte Dünnschichtsensoren verwendet, deren Funktionsweise beispielsweise auf einem kapazitiven Messprinzip beruht. Die Dünnschichtsensoren werden üblicherweise planar gefertigt, das heißt, dass alle aktiven Schichten und auch die Kontaktierungsflächen der Dünnschichtsensoren auf einer Oberfläche der Dünnschichtsensoren untergebracht sind. Auf der Rückseite derartiger Dünnschichtsensoren befinden sich dann meist keine Beschichtungen.

Zur Herstellung eines funktionsfähigen Sensorsystems werden, möglichst automatisiert, Leiterplatten mit diesen Sensoren bestückt und entsprechend elektrisch kontaktiert.

In der EP 1 046 030 B1 wird ein derartiges Sensorsystem beschrieben, wobei der sensitive Bereich des Sensors an einer Ausnehmung der Leiterplatte angeordnet ist. Diese Bauweise hat den Nachteil, dass im Betrieb des Sensorsystems beide Seiten der Leiterplatte stets der zu messenden Feuchte ausgesetzt sind. Hinzu kommt, dass durch die Bereitstellung der Ausnehmung in der Leiterplatte zusätzliche Fertigungskosten entstehen.

Aus der US 4942364 ist ein resistiv wirkender Feuchtesensor bekannt, bei dem der feuchte-abhängige elektrische Widerstand eines geeignet präparierten Vliesmaterials bestimmt wird. Dieser Feuchtesensor verfügt über zwei Anschlussdrähte zum Einbau in eine elektrische Schaltung. Die Anschlussdrähte sind dabei mit Hilfe eines Leitklebers an dem Vliesmaterial kontaktiert. Derartige Sensoren haben den Nachteil, dass sie nicht oder nur kaum für eine automatischen Bestückung auf einer Leiterplatte geeignet sind.

Der Erfindung liegt daher die Aufgabe zugrunde, ein Sensorsystem zu schaffen, welches mit geringem Herstellungsaufwand fertigbar ist, und eine hohe Robustheit sowie eine gute Messgenauigkeit aufweist. Ebenso wird durch die Erfindung ein kostengünstiges und sicheres Verfahren zur Herstellung eines derartigen Sensorsystems bereitgestellt.

Diese Aufgabe wird erfindungsgemäß durch die Merkmale des Anspruches 1 bzw des Anspruches 7 gelöst.

Erfindungsgemäß wird die Kontaktierungsfläche eines Dünnschichtsensors mit einem Kontaktpad auf einer Leiterplatte mit einem Leitkleber elektrisch verbunden. Dabei ist der Sensor bezüglich einer Oberfläche der Leiterplatte so platziert, dass die Kontaktierungsfläche auf einer Oberfläche des Dünnschichtsensors angeordnet ist, die der besagten Oberfläche der Leiterplatte abgewandt ist.

Als Leitkleber kommen hier Kleber in Betracht, welche einen vergleichsweise niedrigen elektrischen Volumenwiderstand aufweisen (mit Vorteil kleiner als 10⁻¹ Ωcm, insbesondere kleiner als 10⁻² Ωcm). Bevorzugt werden hier Leitkleber verwendet, die mit elektrisch leitenden Partikeln gefüllt sind und einen Füllstoffanteil von über 50% Gew., insbesondere mehr als 66% Gew., aufweisen.

In einer bevorzugten Ausgestaltung der Erfindung ist zwischen dem Dünnschichtsensor und der Leiterplatte ein Montagekleber vorgesehen, der einerseits den Montagevorgang vereinfacht sowie die Betriebssicherheit des Verfahrens steigert und andererseits auch eine gute thermische Ankopplung des Dünnschichtsensors an die Leiterplatte gewährleistet. Besonders günstig ist es in diesem Zusammenhang, wenn der Montagekleber eine hohe Wärmeleitfähigkeit, insbesondere größer 0,3 W/(m·K) aufweist. Mit Vorteil hat der Montagekleber Wärmeleitfähigkeit größer als 0,5 W/(m·K).

Vorteilhafte Ausbildungen der Erfindung entnimmt man den abhängigen Ansprüchen.

Weitere Einzelheiten und Vorteile des erfindungsgemäßen Sensorsystems, sowie des entsprechenden Herstellungsverfahrens ergeben sich aus der nachfolgenden Beschreibung eines Ausführungsbeispiels anhand der beiliegenden Figuren.

Es zeigen die
- Figur 1: eine Draufsicht auf das erfindungsgemäße Sensorsystem
- Figur 2: einen Schnitt X-X durch das erfindungsgemäße Sensorsystem,
- Figuren 3a bis 3d: zur Erläuterung des Herstellungsverfahrens jeweils eine Draufsicht auf das erfindungsgemäße Sensorsystem nach unterschiedlichen Herstellungsschritten.

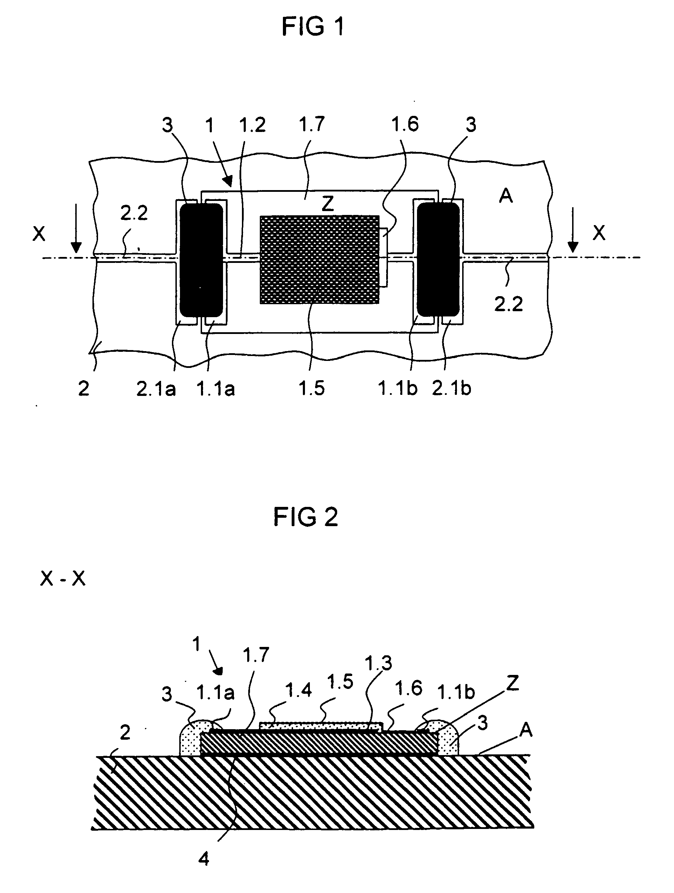

In der Figur 1 ist eine Draufsicht auf ein erfindungsgemäßes Sensorsystem gezeigt. Das Sensorsystem besteht aus einem Dünnschichtsensor 1 und einer Leiterplatte 2, von der hier nur ein Ausschnitt dargestellt ist.

Der Dünnschichtsensor 1 dient zur Messung der relativen Luftfeuchte und beruht auf einem kapazitiven Funktionsprinzip. Der Dünnschichtsensor 1 umfasst ein Substrat 1.7, auf dessen Oberfläche Z eine Grundelektrode 1.3 (siehe Figur 2), im gezeigten Beispiel aus Gold, aufgebracht ist. Das Substrat 1.7 besteht im Ausführungsbeispiel aus Glas. Die Grundelektrode 1.3 ist über eine Leiterbahn 1.2 mit einer Kontaktierungsfläche 1.1a elektrisch verbunden. Sowohl die Leiterbahn 1.2 als auch die Kontaktierungsfläche 1.1a befinden sich auf der Oberfläche Z des Substrats 1.7. Über der Grundelektrode 1.3 ist in einem sensitiven Bereich des Dünnschichtsensors 1 ein feuchtesensitives Polymer 1.4 aufgetragen. Auf diesem feuchtesensitiven Polymer 1.4 ist eine poröse Feuchteelektrode 1.5 aufgebracht, welche über eine Verbindungselektrode 1.6 mit einer weiteren Kontaktierungsfläche 1.1b auf dem Substrat 1.7 in elektrischem Kontakt steht. Der Dünnschichtsensor 1 weist also einerseits die Oberfläche Z mit dem sensitiven Bereich und den Kontaktierungsflächen 1.1a, 1.1b auf, und verfügt andererseits über eine der Oberfläche Z gegenüberliegenden passiven Seite oder Rückseite, auf der keinerlei Beschichtung des Substrats 1.7 vorgenommen wurde.

Die Leiterplatte 2 weist eine Oberfläche A auf, auf der Leiterbahnen 2.2 und Kontaktpads 2.1a, 2.1b, hier in Form von dünnen elektrisch leitenden Kupferschichten, aufgebracht sind. Der Dünnschichtsensor 1 ist im Sensorsystem bezüglich der Oberfläche A der Leiterplatte 2 so platziert ist, dass die Oberfläche Z des Dünnschichtsensors 1, welche auch den sensitiven Bereich aufweist, der Oberfläche A der Leiterplatte 2 abgewandt ist. Das heißt also, dass die Oberfläche A der Leiterplatte und die Oberfläche Z des Dünnschichtsensors 1 im Wesentlichen parallel zueinander ausgerichtet sind aber in unterschiedlichen geometrischen Ebenen liegen.

Im Bereich zwischen dem Dünnschichtsensor 1 und der Leiterplatte 2 befindet sich eine Schicht, die durch einen Montagekleber 4 gebildet wird. Der Montagekleber 4 besteht aus einer Polymermatrix und Füllstoffen, im gezeigten Beispiel Silberpartikel, so dass dessen Wärmeleitfähigkeit mit 0,75 W(m·K) vergleichsweise groß ist.

Zum Übertragen von Sensorströmen vom Dünnschichtsensor 1 auf die Leiterplatte 2 ist die Kontaktierungsfläche 1.1a des Dünnschichtsensors 1 und das Kontaktpad 2.1a der Leiterplatte 2 durch einen Leitkleber 3 elektrisch und mechanisch miteinander verbunden. Der Leitkleber 3 haftet also sowohl an der Kontaktierungsfläche 1.1a des Dünnschichtsensors 1 als auch an dem Kontaktpad 2.1a der Leiterplatte 2, so dass über den Leitkleber 3 elektrische Spannungen bzw. Ströme übertragbar sind.

Als Messgröße dient bei diesem Sensortyp die Änderung der Kapazität des sensitiven Bereiches infolge der Wasseradsorption des feuchtesensitiven Polymers 1.4. Die Auswertung der daraus resultierenden und über den Leitkleber 3 geleiteten Ströme erfolgt dann auf der Leiterplatte 2.

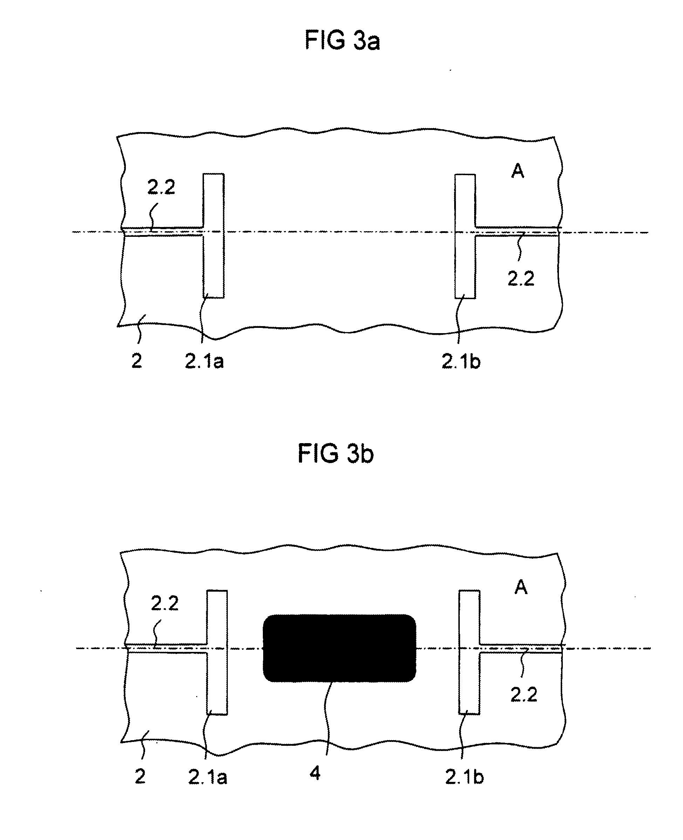

Zur Herstellung des erfindungsgemäßen Sensorsystems wird zunächst gemäß der Figur 3a eine Leiterplatte 2 bereitgestellt, auf der bereits auf der Oberfläche A die Leiterbahnen 2.2 und die Kontaktpads 2.1a, 2.1b aufgebracht sind.

Danach wird in einem ersten Schritt S1 der Montagekleber 4 auf die Oberfläche A der Leiterplatte 2 im Bereich der späteren Berührfläche, hier also zwischen den beiden Kontaktpads 2.1a, 2.1b, aufgetragen (Figur 3b). Die durch den Montagekleber 4 benetzte Fläche ist unmittelbar nach dem Auftragen des Montageklebers 4 kleiner als die Fläche des Substrats 1.7 des Dünnschichtsensors 1.

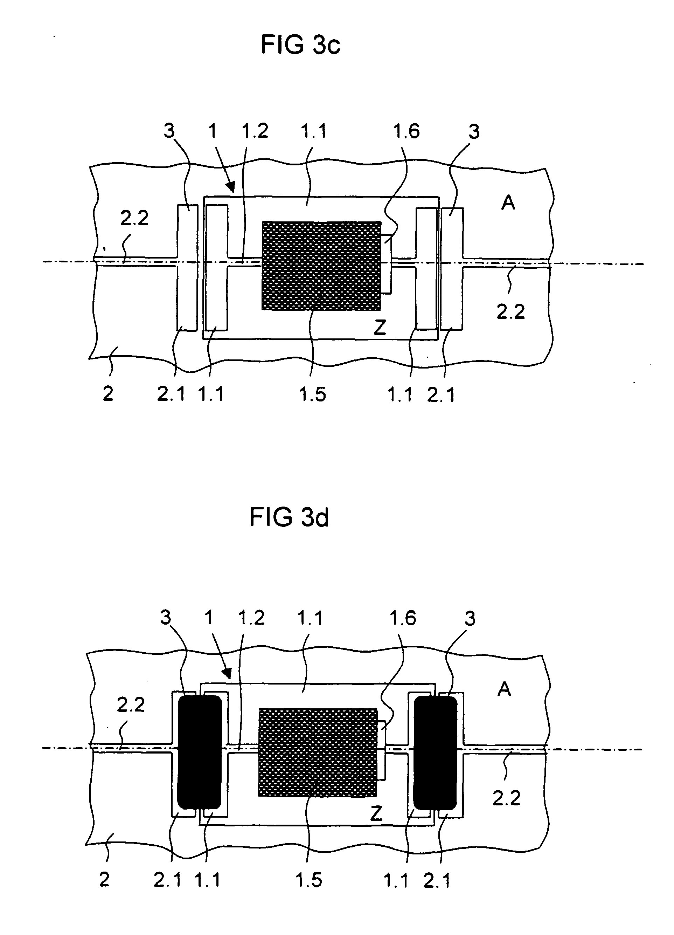

In einem weiteren Schritt S2 wird, wie in der Figur 3c gezeigt, der Dünnschichtsensor 1 bezüglich der Leiterplatte 2 platziert. Dabei ist der Dünnschichtsensor 1 so angeordnet, dass die Oberfläche Z des Dünnschichtsensors 1, an welcher die Kontaktierungsflächen 1.1 angeordnet sind, der Oberfläche A der Leiterplatte 2 abgewandt ist. Mit anderen Worten wird die passive, nicht sensitive Seite, also die Rückseite des Dünnschichtsensors 1 auf die Leiterplatte 2 gefügt beziehungsweise geklebt. Die Menge des Montageklebers 4 wurde im Schritt S1 so bemessen, dass nach dem platzieren des Dünnschichtsensors 1 auf der Leiterplatte 2 kein Montagekleber 4 über den Rand des Dünnschichtsensors 2 gedrückt wird, bzw. kein Montagekleber 4 infolge des Aufdrückens des Dünnschichtsensors 2 auf die Leiterplatte 2 seitlich aus dem Fügespalt heraustritt oder etwa die Kontaktpads 2.1a, 2.1b bedeckt. Auf diese Weise ist nach dem Schritt S2 sichergestellt, dass die Position des Dünnschichtsensors 1 auf der Leiterplatte 2 fixiert ist.

Im nachfolgenden Schritt S3 wird ein Leitkleber 3 an einer ersten Klebestelle auf das Kontaktpad 2.1a und die Kontaktierungsfläche 1.1a gegeben. Das Volumen des Leitklebers 3 an dieser Klebestelle ist dabei so bemessen, dass durch den Leitkleber 3 sowohl die Kontaktierungsfläche 1.1a als auch das Kontaktpad 2.1a berührt wird und nach dem Aushärten des Leitklebers 3 an diesen beiden Stellen haftet. Auf diese Weise wird eine elektrische Verbindung zwischen dem Kontaktpad 2.1a und der Kontaktierungsfläche 1.1a hergestellt. Da das Kontaktpad 2.1a und die Kontaktierungsfläche 1.1a in zwei unterschiedlichen zueinander parallelen geometrischen Flächen liegen, ist der Leitkleber 3 um eine Kante des Dünnschichtsensors 1 herum angeordnet. Analog werden das Kontaktpad 2.1b und die Kontaktierungsfläche 1.1b mit einer zweiten Klebestelle miteinander durch den Leitkleber 3 verbunden, so dass nach dem Schritt S3 ein Sensorsystem gemäß der Figur 3d vorliegt.

Durch die Verwendung eines Montageklebers 4 wird einerseits die Klebeverbindung des Leitklebers 3 mechanisch entlastet. Andererseits ist durch die Schicht des Montageklebers 4 sichergestellt, dass eine gute thermische Ankopplung des Dünnschichtsensors 1 an die Leiterplatte 2 gegeben ist, zumal der Montagekleber 4, wie bereits erwähnt, eine hohe Wärmeleitfähigkeit aufweist. Diese gute thermische Ankopplung ist insbesondere von Vorteil, wenn an der Leiterplatte 2 ein Temperatursensor angeordnet ist, so dass praktisch kein Temperaturgradient zwischen Temperatursensor und Dünnschichtsensor 1 vorliegt, was besonders bei Taupunktmessungen von großer Bedeutung für die Messqualität ist.

Das Sensorsystem kann, bedingt durch die beschriebene Bauweise, nunmehr so eingesetzt werden, dass nur eine Oberfläche der Leiterplatte 2, nämlich die Oberfläche A der feuchten Luft ausgesetzt wird. Dieser Aspekt eröffnet daher Möglichkeiten derartige Leiterplatten 2 kostengünstiger herzustellen und erhöht die Robustheit eines derartigen Sensorsystems.

## Patentansprüche

1. Sensorsystem, bestehend aus
· einem Dünnschichtsensor (1) mit mindestens einer Kontaktierungsfläche (1.1a, 1.1b) an dessen Oberfläche (Z) und
· einer Leiterplatte (2) mit mindestens einem Kontaktpad (2.1a, 2.1b) auf deren Oberfläche (A),
wobei der Dünnschichtsensor (1) bezüglich der Oberfläche (A) der Leiterplatte (2) so platziert ist, dass die Oberfläche (Z) des Dünnschichtsensors (1) der Oberfläche (A) der Leiterplatte (2) abgewandt ist, und
ein Leitkleber (3) zum Übertragen von Sensorströmen vom Dünnschichtsensor (1) auf die Leiterplatte (2) sowohl an
- der Kontaktierungsfläche (1.1a, 1.1b) des Dünnschichtsensors (1) als auch
- am Kontaktpad (2.1a, 2.1b) auf der Oberfläche (A) der Leiterplatte (2)
haftet.

2. Sensorsystem gemäß dem Anspruch 1, wobei der Dünnschichtsensor (1) ein Feuchtesensor ist.

3. Sensorsystem gemäß dem Anspruch 2, wobei die Funktionsweise des Dünnschichtsensors auf einem kapazitiven Messprinzip beruht.

4. Sensorsystem gemäß einem der Ansprüche 1 bis 3, wobei der Dünnschichtsensor (2) zwei Kontaktierungsflächen (1.1a, 1.1b) aufweist, die beide durch einem Leitkleber (3) mit jeweils einem Kontaktpad (2.1 a, 2.1b) der Leiterplatte (2) verbunden sind.

5. Sensorsystem gemäß einem der Ansprüche 1 bis 4, wobei zumindest in einem Teilbereich zwischen dem Dünnschichtsensor (1) und der Leiterplatte (2) ein Montagekleber (4) angeordnet ist.

6. Sensorsystem gemäß dem Anspruch 5, wobei der Montagekleber (4) eine Wärmeleitfähigkeit größer als 0,3 W/(m·K) aufweist.

7. Verfahren zur Herstellung eines Sensorsystems mit folgenden Schritten:
(S2) Platzieren eines Dünnschichtsensors (1) bezüglich einer Oberfläche (A) einer Leiterplatte (2), derart, dass eine Oberfläche (Z) des Dünnschichtsensors (1), an welcher eine Kontaktierungsfläche (1.1a, 1.1b) angeordnet ist, der Oberfläche (A) der Leiterplatte (2) abgewandt ist,
(S3) Kontaktieren des Dünnschichtsensors (1) mit der Leiterplatte (2) in der Weise, dass die Kontaktierungsfläche (1.1a, 1.1b) des Dünnschichtsensors (1) mit einem Kontaktpad (2.1a, 2.1b) auf der Oberfläche (A) der Leiterplatte (2) mit einem Leitkleber (3) elektrisch verbunden wird.

8. Verfahren gemäß dem Anspruch 7, wobei vor dem Platzieren (S2) eines Dünnschichtsensors (1) auf einer Oberfläche (A) einer Leiterplatte (2) ein Montagekleber (4) aufgetragen wird (S1).

## Claims

1. Sensor system comprising
- a thin film sensor (1) having at least one contacting surface (1.1a, 1.1b) on the surface (Z) thereof and
- a printed circuit board (2) having at least one contact pad (2.1a, 2.1b) on the surface (A) thereof,
the thin film sensor (1) being placed with respect to the surface (A) of the printed circuit board (2) such that the surface (Z) of the thin film sensor (1) is orientated away from the surface (A) of the printed circuit board (2), and
a conductive adhesive (3) for transmitting sensor currents from the thin film sensor (1) to the printed circuit board (2) adhering both on
- the contacting surface (1.1a, 1.1b) of the thin film sensor (1) and
- on the contact pad (2.1a, 2.1b) on the surface (A) of the printed circuit board (2).

2. Sensor system according to claim 1, the thin film sensor (1) being a humidity sensor.

3. Sensor system according to claim 2, the mode of operation of the thin film sensor being based on a capacitive measuring principle.

4. Sensor system according to one of the claims 1 to 3, the thin film sensor (2) having two contacting surfaces (1.1a, 1.1b) which are both connected by a conductive adhesive (3) to respectively one contact pad (2.1a, 2.1b) of the printed circuit board (2).

5. Sensor system according to one of the claims 1 to 4, a mounting adhesive (4) being disposed in at least one partial region between the thin film sensor (1) and the printed circuit board (2).

6. Sensor system according to claim 5, the mounting adhesive (4) having a heat conductivity greater than 0.3 W/(m•K).

7. Method for the production of a sensor system having the following steps:
(S2) placing a thin film sensor (1) with respect to a surface (A) of a printed circuit board (2) in such a manner that a surface (Z) of the thin film surface (1), on which a contacting surface (1.1a, 1.1b) is disposed, is orientated away from the surface (A) of the printed circuit board (2),
(S3) contacting of the thin film sensor (1) with the printed circuit board (2) in such a manner that the contacting surface (1.1a, 1.1b) of the thin film sensor (1) is connected electrically to a contact pad (2.1a, 2.1b) on the surface (A) of the printed circuit board (2) by means of a conductive adhesive (3).

8. Method according to claim 7, a mounting adhesive (4) being applied (S1) before placing (S2) a thin film sensor (1) on a surface (A) of a printed circuit board (2).

## Revendications

1. Système de détection comportant :
- un détecteur à couche mince (1) avec sur sa surface (Z) au moins une surface de contact électrique (1.1a, 1.1b) et
- un circuit imprimé (2) portant sur sa surface (A) au moins une plage de contact (2.1a, 2.1b),
dans lequel le capteur à couche mince (1), par rapport à la surface (A) du circuit imprimé (2) est placé de manière que la surface (Z) du détecteur (1) se trouve à l'opposé de la surface (A) du circuit imprimé (2), et un adhésif conducteur (3), destiné à transmettre au circuit imprimé (2) des courants issus du détecteur (1), adhère à la fois à la surface de contact électrique (1.1a, 1.1b) du détecteur à couche mince (1) et à la plage de contact (2.1a, 2.1b) située à la surface (A) du circuit imprimé (2).

2. Système de détection selon la revendication 1, dans lequel le détecteur à couche mince (1) est un détecteur d'humidité.

3. Système selon la revendication 2, dans lequel le mode de fonctionnement du détecteur à couche mince est basé sur le principe de mesure de capacités.

4. Système selon une des revendications 1 à 3, dans lequel le détecteur à couche mince (1) présente deux surfaces de contact électrique (1.1a, 1.1b) reliées chacune par un adhésif conducteur (3) à une plage de contact (2.1a, 2.1b) du circuit imprimé (2).

5. Système selon une des revendications 1 à 4, dans lequel un adhésif de montage (4) est placé dans au moins une partie de la zone située entre le détecteur à couche mince (1) et le circuit imprimé (2).

6. Système selon la revendication 5, dans lequel l'adhésif de montage (4) présente une conductibilité thermique dépassant 0,3W/(mK).

7. Procédé de fabrication d'un système de détection, présentant les étapes suivantes :
- (S2) placer un détecteur par rapport à la surface (A) d'un circuit imprimé (2), de manière que cette surface se trouve à l'opposé d'une surface (Z) du détecteur à couche mince (1) sur laquelle se trouve une surface de contact électrique (1.1a, 1.1b).
- (S3) mettre en contact électrique le détecteur à couche mince (1) avec le circuit imprimé (2), de manière que la surface de contact électrique (1.1a, 1.1b) du détecteur (1) se trouve reliée électriquement par un adhésif conducteur (3) à la plage de contact (2.1 a, 2.1b) située à la surface (A) du circuit imprimé (2).

8. Procédé selon la revendication 7, dans lequel, avant le placement (S2) d'un détecteur à couche mince (1), sur la surface (A) d'un circuit imprimé (2) est déposé un adhésif de montage (4).
